(19) Europäisches Patentamt

European Patent Office

Office européen des brevets

(11) Veröffentlichungsnummer: **0 416 208 A2**

# EUROPÄISCHE PATENTANMELDUNG

(12)

(21) Anmeldenummer: **90108958.1**

(22) Anmeldetag: **12.05.90**

(51) Int. Cl.⁵: **B60J 5/04**

(30) Priorität: **30.08.89 DE 3928685**

(43) Veröffentlichungstag der Anmeldung:
**13.03.91 Patentblatt 91/11**

(84) Benannte Vertragsstaaten:
**DE ES FR GB SE**

(71) Anmelder: **Brose Fahrzeugteile GmbH & Co.
KG
Postfach 1353 Ketschendorfer Strasse 38-50
W-8630 Coburg(DE)**

(72) Erfinder: **Köhler, Dieter
Hauptstrasse 114
W-8601 Untermerzbach, OT
Memmelsdorf(DE)**

(74) Vertreter: **Pretzell, Hellmut, Dipl.-Ing.
Brose Fahrzeugteile GmbH & Co.
Kommanditgesellschaft Patentabteilung
Postfach 1353
W-8630 Coburg(DE)**

(54) **Trägerplatte mit Dichtungsprofil.**

(57) Vorrichtung zum Befestigen einer Trägerplatte 2 für Konstruktionselemente im Innern von Kraftfahrzeugtüren 1, insbesondere zum Befestigen einer Fensterheber-Grundplatte 2 an der Innenwand einer Kraftfahrzeugtür 1. Ein Teil des äußeren Umfangs der Trägerplatte 2 ist mit einem biegsamen, strangförmigen Dichtungsprofil 3 verbunden, das im montierten Zustand des Konstruktionselementes 4 dichtend an der Türinnenwand 11 der Kraftfahrzeugtür 1 anliegt. In der Innenwand 11 der Kraftfahrzeugtür 1 ist eine der Umrißlinie der Trägerplatte 2 entsprechende Aussparung 14 vorgesehen.

*FIG. 2*

EP 0 416 208 A2

Die Erfindung bezieht sich auf eine Vorrichtung zum Befestigen einer Trägerplatte von Konstruktionselementen im Innern von Kraftfahrzeugtüren nach dem Oberbegriff des Anspruchs 1.

Zur Montage bzw. Demontage von Konstruktionselementen in Kraftfahrzeugtüren wie Türschloßeinrichtungen, Fensterhebevorrichtungen, und dgl. sind in der Türinnenwand kleine Aussparungen vorgesehen, über die der Monteur die notwendigen Konstruktionselemente anbringen, austauschen bzw. entfernen kann.

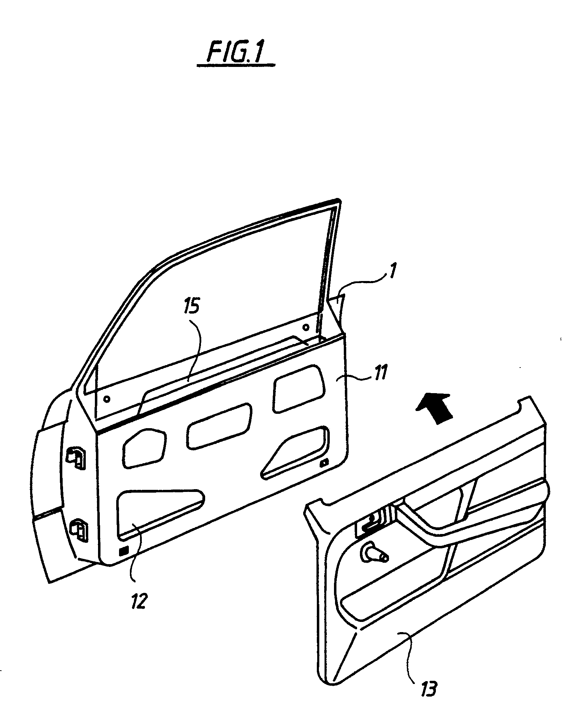

In Figur 1 ist in schematischer, perspektiver Darstellung eine Kraftfahrzeugtür 1 dargestellt, deren Türinnenwand 11 mehrere derartige Ausnehmungen 12 aufweist, durch die Konstruktionselemente wie bspw. ein Fensterheber zum Heben und Absenken der Fensterscheibe 15 der Kraftfahrzeugtür 1 montiert bzw. demontiert werden. Die Türinnenwand 11 wird nach der Montage mit einer Kunststoffolie abgedeckt, damit keine Feuchtigkeit von der Außenseite der Kraftfahrzeugtür 1 durch die Türinnenwand 11 in den Innenraum eindringen kann, bevor die Türinnenverkleidung 13 auf die Türinnenwand 11 aufgesetzt und befestigt wird.

Die Montage und Demontage von Konstruktionsteilen im Innern einer Kraftfahrzeugtür 1 gemäß Figur 1 ist in der Großserie äußerst zeitaufwendig und dementsprechend teuer. Außerdem ist zum Feuchtigkeitsschutz eine die gesamte Tür innenwand 11 abdeckende Kunststoffolie erforderlich, die bei einer Demontage leicht beschädigt wird und demzufolge durch eine neue Abdeckfolie ersetzt werden muß.

Ein weiterer Nachteil der bekannten Ausgestaltung einer Kraftfahrzeugtür besteht darin, daß die im Innern der Kraftfahrzeugtür 1 angebrachten Konstruktionselemente feuchtigkeitsdicht ausgeführt werden müssen, bspw. muß ein Fensterhebermotor für einen elektrischen Fensterheber gegen unvermeidlichen Wassereintritt im Bereich des Scheibenschlitzes abgedichtet sein und eine entsprechend aufwendige, wassergeschützte Verdrahtung in der Kraftfahrzeugtür vorgesehen werden.

Aufgabe der vorliegenden Erfindung ist es daher, eine Vorrichtung der eingangs genannten Art zu schaffen, die eine leichte Montage und Demontage von Konstruktionselementen im Innern von Kraftfahrzeugtüren ermöglicht, und die mit einfachen Mitteln eine feuchtigkeitsdichte Abdichtung der Türinnenwand vom Türinnenraum gewährleistet und damit sicherstellt, daß zwischen der Türinnenwand und der Türinnenverkleidung angeordnete Konstruktionselemente nicht gegenüber Feuchtigkeitseintritt geschützt werden müssen.

Diese Aufgabe wird durch das kennzeichnende Merkmal des Anspruchs 1 gelöst.

Die erfindungsgemäße Lösung schafft die Voraussetzung für das Anbringen einer großen Aussparung in der Türinnenwand, da die gesamte Trägerplatte für die betreffenden Konstruktionselemente in einem Stück in die Türinnenwand einge setzt werden kann. Gleichzeitig entfällt die Notwendigkeit, die verschiedenen kleinen Ausnehmungen in der Türinnenwand mit einer Kunststoffolie abzudekken. Zwischen der Türinnenverkleidung der Türinnenwand vorgesehene Konstruktionselemente können vorteilhafterweise ohne jeglichen Feuchtigkeitsschutz ausgebildet werden, so daß bspw. ein elektrischer Fensterhebermotor nicht gegen Wassereintritt abgedichtet werden muß und eine billigere Verdrahtung für Trockenräume verwendet werden kann.

Eine vorteilhafte Ausgestaltung der erfindungsgemäßen Lösung ist dadurch gekennzeichnet, daß das biegsame, strangförmige Dichtungsprofil mit dem im montierten Zustand der Trägerplatte äußeren Umfang der unteren Hälfte der Trägerplatte verbunden ist. Durch diese Ausgestaltung wird erreicht, daß mit einer minimalen Länge des biegsamen, strangförmigen Dichtungsprofils eine optimale Wirkung erzielt wird. Infolge der konstruktiven Ausgestaltung des Einsatzes für die Trägerplatte wird sichergestellt, daß Feuchtigkeit nicht vom Türinnenraum in den Zwischenraum zwischen Türinnenwand und Türinnenverkleidung gelangen kann.

Eine vorteilhafte Weiterbildung der erfindungsgemäßen Lösung ist dadurch gekennzeichnet, daß das biegsame, strangförmige Dichtungsprofil aus einem Dichtungsstrang gleichen Querschnitts und von dem Dichtungsstrang senkrecht abstehende Befestigungselementen besteht, die in Bohrungen der Trägerplatte einsetz- oder einziehbar und in den Bohrungen der Trägerplatte verankerbar sind.

Bei dieser Weiterbildung der erfindungsgemäßen Lösung kann das Dichtungsprofil vor der Montage der Trägerplatte mit der Trägerplatte verbunden werden, bevor diese an der Türinnenwand befestigt wird.

Dabei wird die Trägerplatte vorzugsweise mittels zweier Zentriererhöhungen in zwei Befestigungslöcher der Türinnenwand zentriert und anschließend verschraubt, wobei das biegsame, strangförmige Dichtungsprofil zwischen der Außenseite der Türinnenwand und der Innenseite der Trägerplatte gedrückt wird und die Verbindung dichtet.

Eine strangförmiges Dichtungsprofil insbesondere für Kraftfahrzeuge ist bspw. aus der DE-Al-26 29 865 bekannt. Das bekannte, strangförmige Dichtungsprofil weist einen flachen, angenähert rechteckigen Befestigungssteg und ein seitlich angesetztes Dichtprofil auf. Zur Befestigung des strangförmigen Dichtungsprofils ist der Befestigungssteg auf seiner Oberseite mit integralen Rastnoppen versehen, die aus einem senkrecht vom Befestigungssteg ausgehenden Haltesteg und zwei von seinem oberen Ende ausgehenden widerhakenförmig zum Befestigungssteg zurückgeneigten Verhakungslippen bestehen.

Die Montage des strangförmigen Dichtungsprofils erfolgt ohne Hilfsmittel, in denen die Rastnoppen in die dafür vorgesehenen Langlöcher eines Einbauteils eingedrückt werden, bis die Verhakungslippen einrasten und somit das Profil unlösbar mit dem Einbauteil verbinden, wobei das Dichtungsprofil in seine Funktionsposition gebracht wird.

Das Einsetzen der Rastnoppen in die Langlöcher des Einbauteils erweist sich aufgrund des weichen Materials des Dichtungsprofils als verhältnismäßig schwierig, da zunächst die Grundfläche der Rastnoppen sehr tief gegen das Einbauteil gedrückt werden muß, bis die Rastnoppen außer Eingriff mit dem Langloch kommen und somit als Verhakungselemente aufklappen können.

Ein ähnliches biegsames Dichtungsprofil für Kraftfahrzeugtüren ist aus der DE-C-925 153 bekannt, das aus zwei Profilen unterschiedlicher Härte besteht, die fest miteinander verbunden sind, wobei das weichere Profil die eigentliche Dichtung bewirkt, während das härtere Profil Befestigungsmittel aufweist, mit denen das zusammengesetzte Profil an einen Träger befestigt werden kann. Das Befestigungsprofil ist hierbei teilweise in dem Abdichtungsprofil eingebettet und weist einen oder mehrere Vorsprünge auf, die mit dem eingebetteten Teil aus einem Stück bestehen und in Nuten oder Schlitze an dem Träger eingreifen. Auch hier ist ein erheblicher Druck gegen das Befestigungsteil erforderlich, damit ein Verrasten des Befestigungsteils mit dem Trägerteil erfolgt.

Die bekannten Dichtungsprofile weisen einen eckigen Querschnitt auf, der sich im montierten Zustand aufwirft und sich nur mühsam scharfen Kantenverläufen anpassen läßt.

Ein vorteilhaftes biegsames, strangförmiges Dichtungsprofil zum Befestigen einer Trägerplatte von Konstruktionselementen im Innern von Kraftfahrzeugtüren, insbesondere zum Befestigen einer Fensterheber-Grundplatte an der Innenwand einer Kraftfahrzeugtür, besteht aus einem Dichtungsstrang gleichen Querschnitts und von dem Dichtungsstrang senkrecht abstehenden Befestigungselementen, die in Bohrungen der Trägerplatte einsetz- oder einziehbar und in den Bohrungen der Trägerplatte verankerbar sind, wobei der Dichtungsstrang vorzugsweise zylinderförmig ausgebildet ist.

Diese Ausgestaltung der erfindungsgemäßen Lösung ermöglicht zum einen eine leichte Montage des Dichtungsprofils in dem Träger und gewährleistet zum anderen durch die runde Form des Dichtungsstranges eine leichte Anpassung des Dichtungsprofils an scharfe Kantenverläufe und vermeidet jegliches Aufwerfen wie es bei einem eckigen Profil der Fall wäre.

Eine vorteilhafte Weiterbildung ist dadurch gekennzeichnet, daß die Befestigungselemente aus Durchzugs-Gummizylindern mit einem zylindrischen Grundkörper und einem kegelstumpfförmigen, als Verdickung des zylindrischen Grundkörpers ausgebildeten Verhakungsteil bestehen, wobei der Abstand des kegelstumpfförmigen Verhakungsteils vom Dichtungsstrang im wesentlichen gleich der Dicke der Trägerplatte ist.

Ein derartiges, biegsames, strangförmiges Dichtungsprofil ist mit einfachen Mitteln und mit geringem Montageaufwand auch bei sehr weichem Material in einer Trägerplatte befestigbar, wobei die durch die Befestigungsbohrungen gesteckten zylindrischen Grundkörper so weit durch die Befestigungsbohrungen gezogen werden, bis die kegelstumpfförmigen Verhakungsteile an der anderen Seite der Trägerplatte zur Anlage kommen.

Eine Variante eines biegsamen, strangförmigen Dichtungsprofils ist dadurch gekennzeichnet, daß die Befestigungselemente aus formstabilen Clips, vorzugsweise aus Kunststoff bestehen, die in den Dichtungsstrang eingesetzt sind. Dabei weisen die formstabilen Clips eine in den Dichtungsstrang eingesetzte Grundplatte, einen in Längsrichtung geschlitzten zylindrischen Grundkörper und eine kegelstumpfförmige Spitze auf, deren Querschnitt von der Spitze zum Dichtungsstrang zunimmt und in einem der Dicke der Trägerplatte entsprechenden Abstand vom Dichtungsstrang einen Verhakungsvorsprung ausbildet.

Die Verwendung eines derartigen biegsamen Dichtungsstrangs mit feststehenden Clips erweist sich als besonders vorteilhaft, da die formstabilen Clips lediglich in einfacher Weise durch die Bohrungen in der Trägerplatte gedrückt werden und nach dem Passieren des Befestigungselements automatisch in der Trägerplatte verrasten. Dabei ist kein größerer Kraftaufwand erforderlich und gleichzeitig ein sehr weiches Dichtungsprofil verwendbar.

Ein vorteilhaftes Verfahren zur Herstellung eines biegsamen, strangförmigen Dichtungsprofils mit Befestigungselementen der vorstehend genannten Art ist dadurch gekennzeichnet, daß der Dichtungsstrang in Längsrichtung geteilt wird, daß in den einen Teil des Dichtungsstranges Bohrungen an den Stellen der formstabilen Clips vorgesehen werden, daß die formstabilen Clips in die Bohrungen eingesetzt werden, daß eine Klebstoffschicht auf die Teilungsfläche aufgebracht wird und daß die beiden Teile des Dichtungsstrangs an den Trennflächen miteinander verbunden werden. Anhand von in den Zeichnungen dargestellten Ausführungsbeispielen soll der der Erfindung zugrundeliegende Gedanke näher erläutert werden. Es zeigen:

Figur 1 eine perspektivische Ansicht einer konventionellen Kraftfahrzeugtür;

Figur 2 eine schematische, perspektivische Darstellung einer Kraftfahrzeugtür mit einer großen Aussparung in der Türinnenwand und einer in die Aussparung einsetzbaren Fensterheber-Grundplatte sowie einer Türinnenverkleidung;

Figur 3 einen Längsschnitt durch eine Kraftfahrzeugtür gemäß Figur 2 mit montierter Fensterheber-Grundplatte;

Figur 4 eine Draufsicht auf eine Fensterheber-Grundplatte mit eingesetztem Dichtungsprofil;

Figur 5 eine isolierte Ansicht eines biegsamen, strangförmigen Dichtungsprofils mit Durchzugs-Gummizylindern;

Figur 6 einen Schnitt durch das Dichtungsprofil entlang der Linie A-A gemäß Figur 5;

Figur 7 eine Ansicht eines biegsamen, strangförmigen Dichtungsprofils mit Befestigungsclips;

Figur 8 einen Schnitt durch das Dichtungsprofil entlang der Linie B-B gemäß Figur 7;

Figur 9 eine vergrößerte Teilansicht Z des Dichtungsprofils gemäß Figur 7 und

Figur 10 verschiedene Phasen bei der Herstellung eines Dichtungsprofils mit Befestigungsclips.

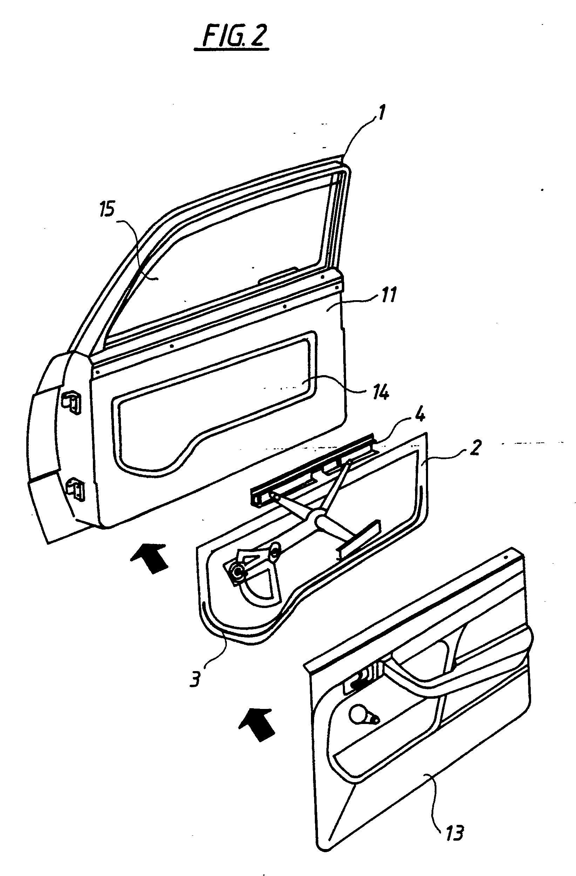

Die in Figur 2 dargestellte perspektivische Explosionszeichnung einzelner Elemente einer Kraftfahrzeugtür 1 zeigt eine in der Türinnenseite 11 angeordnete große Aussparung 14, deren Kontur mit der Kontur einer Trägerplatte, in diesem Falle einer Fensterheber-Grundplatte 2 übereinstimmt. Die Fensterheber-Grundplatte 2 trägt einen Hebelkreuz-Fensterheber 4 zum Heben und Absenken einer in die Kraftfahrzeugtür 1 eingesetzten Fensterscheibe 15, wobei der Funktionsmechanismus des Hebelkreuz-Fensterhebers an sich bekannt ist.

Die Umrißlinie der Aussparung 14 sowie der FensterheberGrundplatte 2 kann mit einem umlaufenden Stanzprofil versehen werden, so daß in diesem Bereich eine definierte Anlage zwischen der Türinnenwand 11 und der FensterheberGrundplatte 2 gegeben ist.

Erfindungsgemäß ist im Bereich der unteren Hälfte der Fensterheber-Grundplatte 2 entlang der äußeren Umrißlinie ein biegsames, strangförmiges Dichtungsprofil 3 in die Fensterheber-Grundplatte 2 eingesetzt und in nachstehend beschriebener Weise mit der Fensterheber-Grundplatte 2 verbunden. Nach der Montage der Fensterheber-Grundplatte 2 bspw. mittels zweier Zentriererhöhungen in zwei Befestigungslöchern der Türinnenwand 11 und anschließender Verschraubung der Fensterheber-Grundplatte 2 mit der Türinnenwand 11 wird die Dichtung zwischen der Türinnenwand 11 und der Fensterheber-Grundplatte 2 eingeklemmt und dichtet diesen unteren Bereich der Anlagefläche ab.

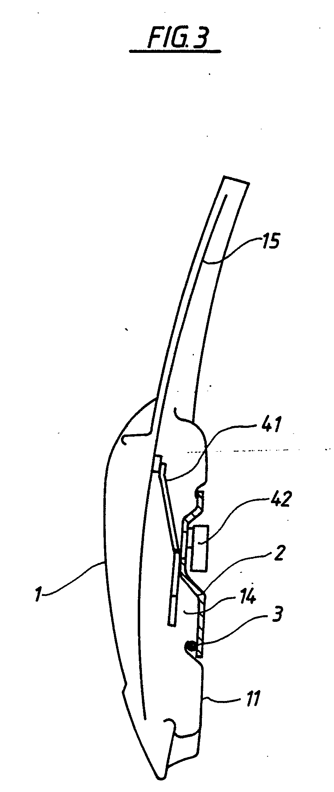

Nach Montage der Fensterheber-Grundplatte 2 in Pfeilrichtung gemäß Figur 2 wird die Türinnenverkleidung 13 auf die Türinnenwand 11 aufgesetzt und befestigt. Dabei kommt die Fensterheberkurbel in der Türinnenverkleidung 13 in Eingriff mit einem entsprechenden Kurbelzapfen des Hebelkreuz-Fensterhebers 4, so daß durch Drehen der Fensterheberkurbel die Türscheibe 15 abgesenkt und angehoben werden kann. In Abwandlung hiervon kann der Fensterheber 4 mit einem Fensterhebermotor versehen werden, so daß durch Betätigen eines Schalters im Kraftfahrzeuginnenraum die Fensterscheibe 15 angehoben und abgesenkt wird. Ein derartiger Mechanismus ist in Figur 3 dargestellt.

Figur 3 zeigt einen Längsschnitt durch eine Kraftfahrzeugtür 1, bei der in eine Aussparung 14 in der Türinnenwand 11 der Kraftfahrzeugtür 1 ein auf einer FensterheberGrundplatte 2 befestiger elektrischer Fensterheber eingesetzt ist.

Die Hebelarme 41 des elektrischen Fensterhebers sind im Türinnenraum auf der einen Seite der Fensterheber-Grund platte 2 angeordnet, während der Elektromotor 42 zum Betätigen des elektrischen Fensterhebers auf der anderen Seite, d.h. auf der Innenseite der Fensterheber-Grundplatte 2 angeordnet ist.

Die Fensterheber-Grundplatte 2 ist mit einem biegsamen, strangförmigen Dichtungsprofil 3 versehen, das im unteren Bereich der Berührungsfläche zwischen Fensterheber-Grundplatte 2 und Türinnenwand 11 seine Dichtfunktion erfüllt.

Figur 3 verdeutlicht, daß eine Dichtfunktion nur im unteren Bereich der Fensterheber-Grundplatte 2 erforderlich ist, da durch die Profilierung der Türinnenwand 11 in den Innenraum der Kraftfahrzeugtür 1 gelangende Feuchtigkeit an der Außenseite der Fensterheber-Grundplatte 2 entlangläuft und durch das mit der Fensterheber-Grundplatte 2 befestigte Dichtungsprofil 3 daran gehindert wird, in den Kraftfahrzeug-Innenraum bzw. in den Bereich zwischen Türinnenwand 11 und Türinnenverkleidung 13 gemäß Figur 2 zu gelangen.

Durch diese feste Abdichtung der Fensterheber-Grundplatte 2 ist das Anbringen einer Kunststoffolie an der Türinnenwand 11 entbehrlich und gleichwohl ein optimaler Feuchtigkeitsschutz für den Elektromotor 42 des elektrischen Fensterhebers gewährleistet, so daß dieser nicht gegen Wassereintritt abgedichtet sein muß. Zusätzlich kann auf eine teure und aufwendige feuchtigkeitsdichte Verkabelung zur Stromzufuhr zum Fensterhebermotor 42 verzichtet werden, da die an der Innenseite verlegten Kabel ebenfalls gegenüber Feuchtigkeit geschützt sind, die über den Fensterscheibenschlitz in den Türinnenraum gelangen kann.

Wie die schematische, perspektivische Darstellung gemäß Figur 2 und der Längsschnitt durch eine Kraftfahrzeugtür gemäß Figur 3 verdeutlichen, kann die Montage bzw. Demontage der Fensterheber-Grundplatte 2 zusammen mit den darauf befindlichen Konstruktionselementen eines manuellen oder elektrischen Fensterhebers 4 in einfacher Weise ohne besondere Montage-Hilfsmittel erfolgen, da zum einen das Einsetzen des auf der Fensterheber-Grundplatte befestigten Fensterhebers in einem Stück erfolgen kann und zum anderen eventuell notwendige Manipulationen im Innenraum der Kraftfahrzeugtür 1 über eine große Aussparung 14 vorgenommen werden können, so daß der Monteur unbehindert eingreifen und Einsicht nehmen kann.

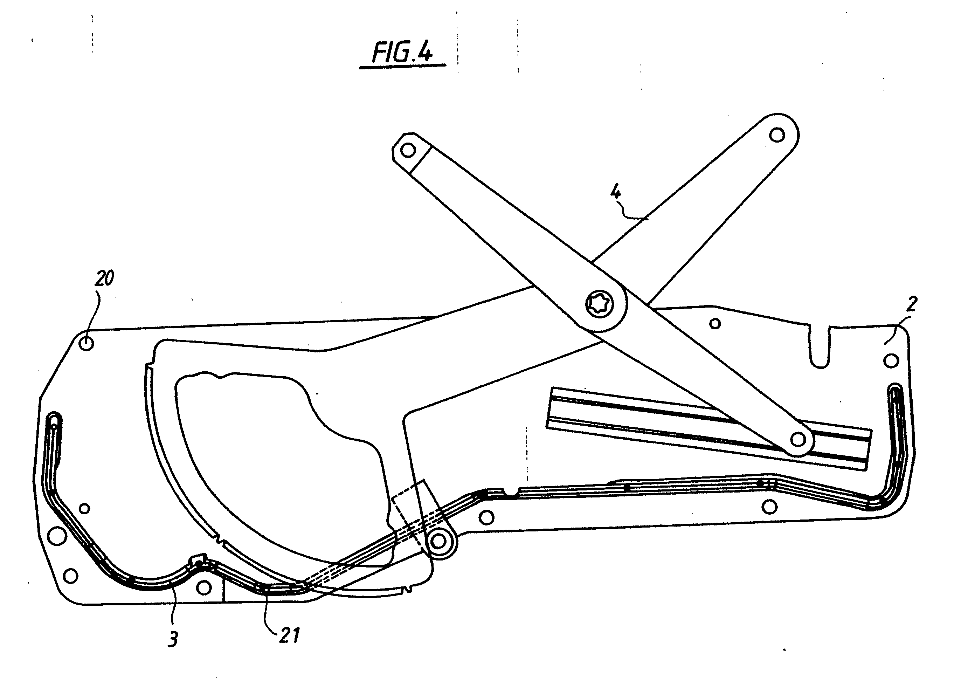

Figur 4 zeigt eine Draufsicht auf eine Fensterheber-Grundplatte 2 mit darauf befestigtem elektrischen oder manuellen Hebelkreuz-Fensterheber 4.

Ein entlang der Umrißlinie der Fensterheber-Grundplatte 2 verlegtes biegsames, strangförmiges Dichtungsprofil 3 wird in Befestigungslöcher 21 in der Fensterheber-Grundplatte 2 eingesteckt und fest mit der Fensterheber-Grundplatte 2 vor der Montage der Fensterheber-Grundplatte 2 an der Türinnenwand einer Kraftfahrzeugtür befestigt. Anschließend wird die Fensterheber-Grundplatte 2 über Montagelöcher 20 mit der Türinnenwand 11 gemäß Figur 2 verschraubt, wobei zuvor eine Zentrierung der Fensterheber-Grundplatte 2 in der Türinnenwand 11 erfolgt und nach der Verschraubung das in der unteren Hälfte der Fensterheber-Grundplatte 2 angeordnete Dichtungsprofil gedrückt wird und der Verbindungsbereich zwischen Fensterheber-Grundplatte 2 und Türinnenwand 11 abdichtet.

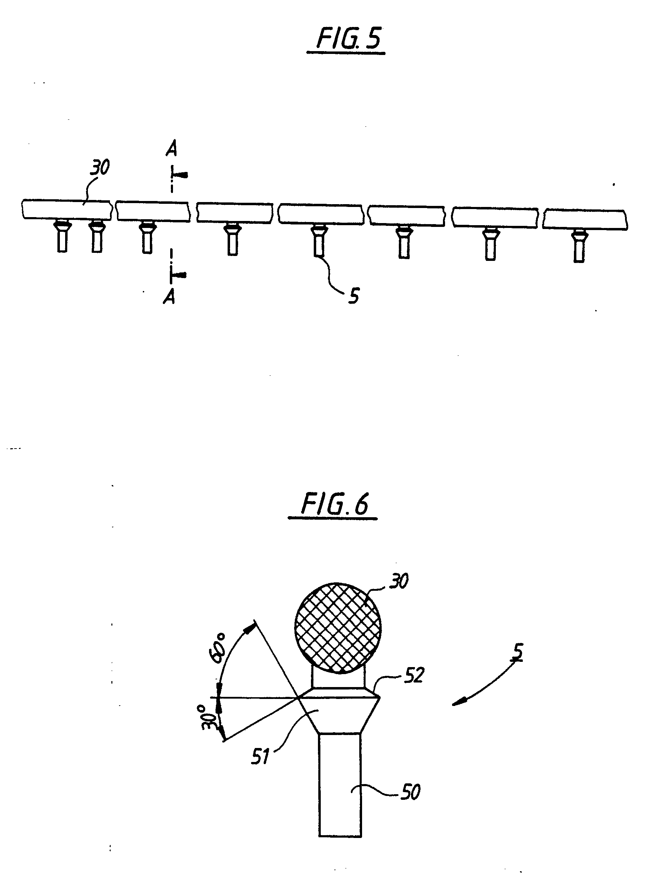

Figur 5 zeigt eine Ansicht einer ersten Ausführungsform eines biegsamen, strangförmigen Dichtungsprofils mit Durchzugs-Gummizylindern 5.

Das biegsame, strangförmige Dichtungsprofil gemäß Figur 5 besteht aus einem zylindrischen Dichtungsstrang 30, von dem senkrecht in vorgebenen Abständen Durchzugs-Gummizylinder abstehen. Der Abstand der einzelnen Durchzugs-Gummizylinder 5 voneinander hängt von der Anordnung der Befestigungslöcher in der Trägeplatte bzw. entsprechend den vorstehend dargestellten Ausführungsbeispiele der Fensterheber-Grundplatte 2 ab.

Zur Befestigung des biegsamen, strangförmigen Dichtungsprofils in der Trägerplatte werden die Durchzugs-Gummizylinder in die entsprechenden Befestigungsbohrungen der Trägerplatte eingesetzt und von der gegenüberliegenden Seite der Trägerplatte in das betreffende Befestigungsloch hineingezogen und dabei in Längsrichtung gedehnt, so daß die Verhakungselemente an der anderen Seite der Trägerplatte zur Anlage kommen und damit das biegsame, strangförmige Dichtungsprofil auf der gewünschten Umrißlinie mit der Trägerplatte verbinden.

Der in Figur 6 dargestellte Schnitt entlang der Linie A-A gemäß Figur 5 verdeutlicht die Konfiguration eines Durchzugs-Gummizylinders 5, der senkrecht vom zylindrischen Dichtungsstrang 30 absteht.

Der Durchzugs-Gummizylinder besteht aus einem zylindrischen Grundkörper 50 und einem kegelstumpfförmigen, als Verdickung des zylindrischen Grundkörpers 50 ausgebildeten Verhakungsteil 51, 52. Der Abstand des Verhakungsteils 51, 52 von dem Dichtungsstrang 30 entspricht dabei im wesentlichen der Dicke der Trägerplatte, die somit im montierten Zustand zwischen Dichtungsstrang 30 und der dem Dichtungsstrang 30 gegenüberliegenden Fläche des Verhakungsteils eingeklemmt wird.

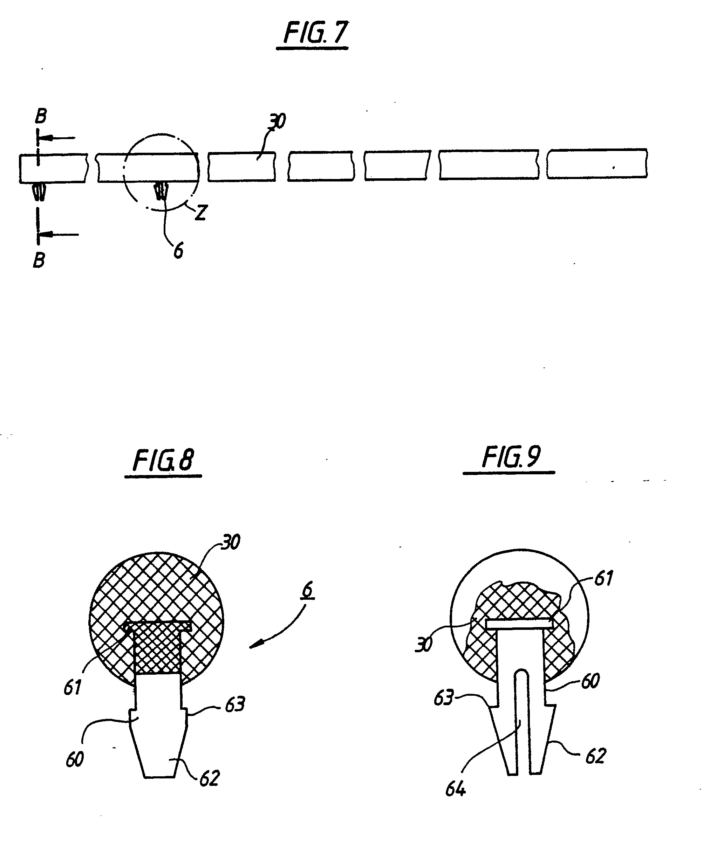

Eine zweite Variante der Ausgestaltung eines biegsamen, strangförmigen Dichtungsprofils ist in Figur 7 dargestellt.

Dieses biegsame, strangförmige Dichtungsprofil besteht ebenfalls aus einem zylindrischen Dichtungsstrang 30, in den formstabile Kunststoffclips 5 in vorgegebenen Abständen eingesetzt sind. Auch hier wird der Abstand zwischen den formstabilen Kunststoffclips 6 von dem Abstand der Befestigungslöcher in der Trägerplatte zur Aufnahme des biegsamen, strangförmigen Dichtungsprofils bestimmt.

Figur 8 zeigt einen Schnitt durch das biegsame, strangförmige Dichtungsprofil entlang der Linei B-B gemäß Figur 7 und verdeutlicht die Ausführungsform des formstabilen Kunststoffclips 6. Dieser besteht aus einer Grundplatte 61, einem zylindrischen Grundkörper 60 und einer kegelstumpfförmigen Spitze 62, deren Querschnitt zum Dichtungsstrang 30 hin zunimmt und an seinem Ende einen Verhakungsvorsprung 63 ausbildet, der im montierten Zustand des biegsamen, strangförmigen Dichtungsprofils an der Innenseite der Trägerplatte anliegt und dabei federbelastet durch die Federwirkung des Dichtungsstranges 30 eine feste Verbindung mit der Trägerplatte eingeht.

Figur 9 verdeutlicht um 90° gedreht die Ansicht Z gemäß Figur 7 und zeigt, daß der formstabile Kunststoffclip mit einem in Längsrichtung verlaufenden Schlitz 64 versehen ist, der dem Kunststoffclip 6 quer zu seiner Längserstreckung Federungseigenschaften verleiht, so daß durch entsprechende Abstimmung zwischen der Befestigungsbohrung in der Trägerplatte und dem Durchmesser der kegelstumpfförmigen Spitze 62 des Kunststoffclips 6 der Verhakungsvorsprung 63 an der Außenfläche der Trägerplatte zur Anlage kommt, sobald der Kunststoffclips 6 vollständig durch die Befestigungsbohrung gesteckt ist. Sowohl durch die Federwirkung des Dichtungsstrangs 30 als auch durch die auseinandergespreizten Enden der Spitze 62 des Kunststoffclips 6 wird eine sichere Befestigung des biegsamen, strangförmigen Dichtungsprofils in der Trägerplatte gewährleistet.

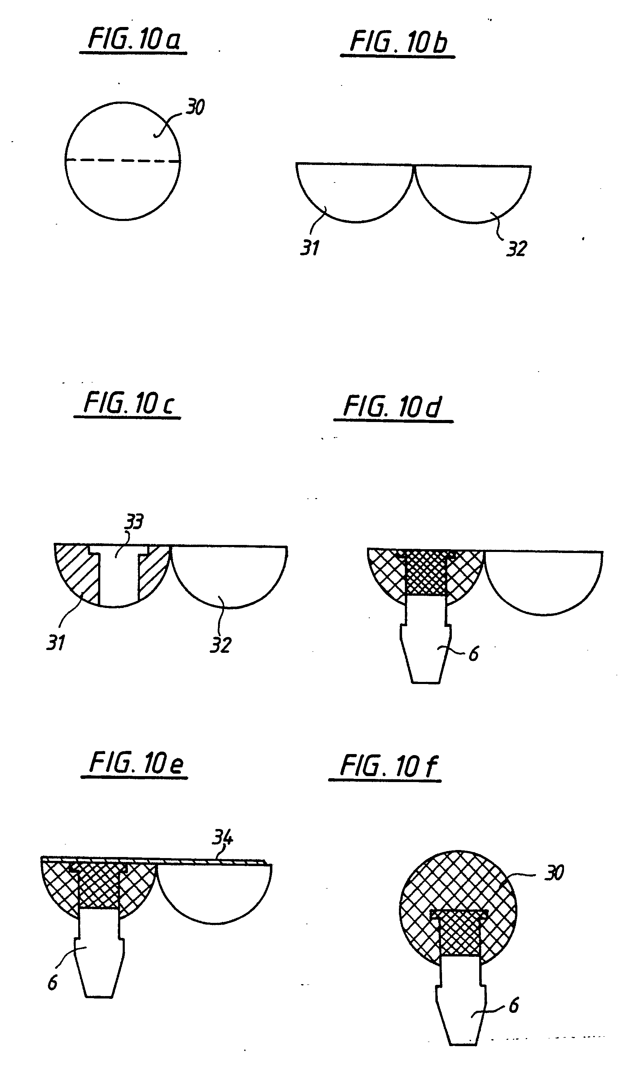

In Figur 10 sind verschiedene Phasen der Herstellung eines biegsamen, strangförmigen Dichtungsprofils mit formstabilen Kunststoffclips gemäß den Figuren 7 bis 9 dargestellt.

Bei diesem bevorzugten Herstellungsverfahren wird der zylindrische Dichtungsstrang 30 des biegsamen, strangförmigen Dichtungsprofils gemäß Figur 10a in Längsrichtung vorzugsweise hälftig geteilt und die beiden Hälften 31, 32 des Dichtungsstranges 30 gemäß Figur 10b auseinandergeklappt.

In eine der beiden Hälften wird eine gestufte Bohrung 33 an den Stellen angebracht, wo die formstabilen Kunststoffclips 6 eingesetzt werden sollen, d.h. über die Länge des Dichtungsstranges 30 verteilt an den Stellen, die den Befestigungsbohrungen in der Trägerplatte entsprechen (Figur 10c).

In diese Bohrungen 33 werden gemäß Figur 10d die vorgefertigten Kunststoffclips 6 eingesetzt und gemäß Figur 10e die Schnittflächen der auseinandergeklappten Hälften des Dichtungsstranges 30 mit einer Klebstoffschicht 34 versehen. Durch Umklappen der einen Schnitthälfte des Dichtungsstranges 30 gemäß Figur 10f wird das komplette biegsame, strangförmige Dichtungsprofil mit eingesetztem formstabilen Kunststoffclip 6 geschaffen.

Selbstverständlich kann neben der in Figur 10 dargestellten hälftigen Teilung des Dichtungsstranges 30 in Längsrichtung auch eine andere Teilung und entsprechende Anordnung einer Bohrung 33 zur Aufnahme des formstabilen Kunststoffclips 6 vorgesehen werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Ansprüche**

1. Vorrichtung zum Befestigen einer Trägerplatte für Konstruktionselemente im Innern von Kraftfahrzeugtüren, insbesondere zum Befestigen einer Fensterheber-Grundplatte an der Innenwand einer Kraftfahrzeugtür, **dadurch gekennzeichnet, daß** mindestens ein Teil des äußeren Umfangs der Trägerplatte (2) mit einem biegsamen, strangförmigen Dichtungsprofil (3) verbunden ist, das im montierten Zustand des Konstruktionselementes (4) dichtend an der Türinnenwand (11) der Kraftfahrzeugtür (1) anliegt und daß eine der Umrißlinie der Trägerplatte (2) entsprechende Aussparung (14) in der Innenwand (11) der Kraftfahrzeugtür (1) vorgesehen ist.

2. Vorrichtung nach Anspruch 1, **dadurch gekennzeichnet, daß** das biegsame, strangförmige Dichtungsprofil (3) mit dem im montierten Zustand der Trägerplatte (2) äußeren Umfang der unteren Hälfte der Trägerplatte (2) verbunden ist.

3. Vorrichtung nach Anspruch 1 oder 2, **dadurch gekennzeichnet, daß** das biegsame, strangförmige Dichtungsprofil (3) im wesentlichen parallel zur Umfangslinie der Trägerplatte (2) verlaufend mit der Trägerplatte (2) verbunden ist.

4. Vorrichtung nach einem der vorangehenden Ansprüche, **dadurch gekennzeichnet, daß** das biegsame, strangförmige Dichtungsprofil (3) aus einem Dichtungsstrang (30) gleichen Querschnitts und von dem Dichtungsstrang (30) senkrecht abstehenden Befestigungselementen (5; 6) besteht, die in Bohrungen (21) der Trägerplatte (2) einsetz- oder einziehbar und in den Bohrungen (21) der Trägerplatte (2) verankerbar sind.

5. Vorrichtung nach Anspruch 4, **dadurch gekennzeichnet, daß** der Dichtungsstrang (30) zylinderförmig ausgebildet ist.

6. Vorrichtung nach Anspruch 4 oder 5, **dadurch gekennzeichnet, daß** die Befestigungselemente aus Durchzugs-Gummizylindern (5) mit einem zylindrischen Grundkörper (50) und einem kegelstumpfförmigen, als Verdickung des zylindrischen Grundkörpers (50) ausgebildeten Verhakungsteil (51, 52) bestehen, wobei der Abstand des kegelstumpfförmigen Verhakungsteils (51, 52) vom Dichtungsstrang (30) im wesentlichen gleich der Dicke der Trägerplatte (2) ist.

7. Vorrichtung nach Anspruch 4 oder 5, **dadurch gekennzeichnet, daß** die Befestigungselemente aus formstabilen Clips (6) vorzugsweise aus Kunststoff bestehen, die in den Dichtungsstrang (30) eingesetzt sind.

8. Vorrichtung nach Anspruch 7, **dadurch gekennzeichnet, daß** die formstabilen Clips (6) eine in den Dichtungsstrang (30) eingesetzte Grundplatte (61), einen in Längsrichtung geschlitzten zylindrischen Grundkörper (60) und eine kegelstumpfförmige Spitze (62, 63) aufweisen, deren Querschnitt von der Spitze zum Dichtungsstrang (30) zunimmt und in einem der Dicke der Trägerplatte (2) entsprechenden Abstand vom Dichtungsstrang (30) einen Verhakungsvorsprung (63) ausbildet.

9. Verfahren zur Herstellung eines biegsamen, strangförmigen Dichtungsprofils nach Anspruch 7 oder 8, **dadurch gekennzeichnet, daß** der Dichtungsstrang (30) in Längsrichtung geteilt wird, daß in den einen Teil (31) des Dichtungsstranges (30) Bohrungen (33) an den Stellen der formstabilen Clips (6) vorgesehen werden, daß die formstabilen Clips (6) in die Bohrungen (33) eingesetzt werden, daß eine Klebstoffschicht (34) auf die Teilungsfläche aufgebracht wird und daß die beiden Teile (31, 32) des Dichtungsstrangs (30) an den Trennflächen miteinander verbunden werden.

## FIG.1

# FIG. 2

## FIG. 3

FIG.4

## FIG. 5

## FIG. 6

## FIG. 7

## FIG. 8

## FIG. 9

## FIG. 10 a

*30*

## FIG. 10 b

*31*          *32*

## FIG. 10 c

*33*

*31*          *32*

## FIG. 10 d

*6*

## FIG. 10 e

*34*

*6*

## FIG. 10 f

*30*

*6*